# EUROPÄISCHE PATENTSCHRIFT

(11) **EP 1 453 886 B1**
(45) Veröffentlichungstag und Bekanntmachung des Hinweises auf die Patenterteilung: **02.07.2008**
(21) Anmeldenummer: 02800599.9
(22) Anmeldetag: 04.10.2002
(51) Int. Cl.: C08G 77/00

(54) **Photochemisch und/oder thermisch strukturierbare Harze auf Silanbasis und ein einstufiges Verfahren zu deren Herstellung**
Silane-based resins that can be photochemically and/or thermally structured and single-step method for their production
Résines à base de silane structurées de manière photochemique et/ou thermique et procédé associé de production en une seule opération

(30) Priorität: 04.10.2001 DE 10148894
(43) Veröffentlichungstag der Anmeldung: 08.09.2004
(60) Teilanmeldung: 08102931.6
(73) Patentinhaber: Fraunhofer-Gesellschaft zur Förderung der angewandten Forschung e.V., 80686 München (DE)
(72) Erfinder: FROEHLICH, Lothar, 97072 Würzburg (DE); JACOB, Stéphane, 97082 Würzburg (DE); POPALL, Michael, 97072 Würzburg (DE); HOUBERTZ-KRAUSS, Ruth, 97440 Werneck (DE)
(74) Vertreter: Leonhard, Frank Reimund
(86) Internationale Anmeldenummer: PCT/EP2002/011160
(87) Internationale Veröffentlichungsnummer: WO 2003/031499

(56) Entgegenhaltungen:
- EP-A- 0 544 257
- DE-A- 19 932 628
- US-A- 3 965 134
- US-A- 4 528 081
- US-A- 5 488 125
- US-A- 6 133 466
- WALTER NOLL: "Chemie und Technologie der Silicone" , VERLAG CHEMIE , 1968 XP002245746 Seite 85 Seite 168
- DATABASE WPI Derwent Publications Ltd., London, GB; AN 1983-831107 XP002245747 & SU 221 293 A (SYNTH RUBBER RES), 23. Mai 1969 (1969-05-23)

## Beschreibung

Die vorliegende Erfindung betrifft strukturierbare Silanharze (auch als organisch modifizierbare (Hetero)-Kieselsäurepolykondensate oder Organopolysiloxane zu bezeichnen), die sich unter Strahlung (insbesondere im UV-Bereich) oder thermisch zu anorganisch-organischen, O-Si-O Gruppen enthaltenden Hybridpolymeren mit verbesserten dielektrischen Eigenschaften sowie ausgezeichneter Substrathaftung umsetzen, insbesondere zu strukturierten Schichten verarbeiten lassen. Diese Materialien eignen sich für eine Verwendung im Hoch- und Höchstfrequenzbereich (z.B. als Mehrschichtsysteme in SBU-Technik (SBU: sequentially build-up), in Dünnschichtmehrlagenschaltungen (DSML)). Die Erfindung betrifft ferner ein Verfahren zum Herstellen solcher Silanharze.

Polymere finden sowohl im Alltag als auch in einer Reihe von Hochtechnologien (z.B. lnformationsgewinnung, -verarbeitung und -übertragung) eine Vielzahl von Anwendungen. Verglichen mit rein organischen Polymeren zeigen organischanorganische Hybridpolymere, z.B. solche, die unter der für die Fraunhofer-Gesellschaft eingetragenen Marke "ORMOCER"e im Handel sind, in der Regel eine sehr gute Temperaturbeständigkeit und Temperaturformbeständigkeit, eine ausgezeichnete Haftung zu einer Vielzahl von Materialien und viele weitere günstige Eigenschaften. Hergestellt werden solche Hybridpolymere in der Regel durch das sogenannte Sol-Gel-Verfahren, bei dem die monomeren oder vorkondensierten Komponenten (in der Regel ggf. organisch modifizierte Silane, teilweise in Kombination mit weiteren Alkoximetallverbindungen und/oder anderen Bestandteilen) einer Hydrolyse und Kondensation der entsprechenden Gruppen unterworfen werden. Nach Entfernung, Austauschen oder Ergänzen des vorhandenen bzw. entstandenen Lösungsmittels erhält man schließlich ein nieder- bis hochviskoses Harz oder einen solchen Lack, das/der in eine geeignete Form gebracht werden kann, z.B. als Beschichtung eines Substrates, als Formkörper oder als Membran, und nach der Formgebung getrocknet, ggf. durch Auspolymerisieren der vorhandenen organischen Gruppen auch weiter gehärtet werden kann. Die letztgenannte organische Polymerisation kann auf Wunsch gezielt nur an vorgesehenen Orten erfolgen, z.B. bei einer Aushärtung durch selektives Belichten mit Hilfe von aktinischer Strahlung, wobei anschließend das nicht polymerisierte Material mit Hilfe geeigneter Lösungsmittel entfernt werden kann. Auf diese Weise kann man photolithographisch strukturierte, dreidimensionale Körper oder Flächen erhalten. Beispielsweise sind aus der DE 199 32 629 A1 organisch modifizierte, lagerstabile Kieselsäurepolykondensate bekannt, die UV-härtbar und photostrukturierbar sind, und die im nahen Infrarot (NIR) transparent sind. Diese Harze können z.B. als Photoresist, als Photoresist mit Negativresistverhalten oder als Dielektrikum ( i.d.R. isolierender Werkstoff) für die Mikrosystemtechnik (beinhaltet u.a. Mikroelektronik, Mikrooptik und Mikromechanik) eingesetzt werden.

Trägermaterialien für Dünnschichtschaltungen sind teilweise direkt für Hybridanwendungen entwickelte Keramiken, Si-Wafer oder organische Materialien aus der Leiterplatten- und Halbleitertechnik. Deren dielektrische bzw. sonstige Eigenschaften lassen eine Anwendung im Höchstfrequenzbereich jedoch unbefriedigend erscheinen. So weisen kommerziell erhältliche Dielektrika (z.B. Benzocyclobutene: BCB wie Cyclotene^{™} 4026-46 von Dow Chemical, Polyimide PI: Pyralin^{™} 2722 von Du Pont oder glasfaserverstärktes PTFE-Laminat: RT/Duorid^{™} 5880 von Rogers Corporation) im niederen Hochfrequenzbereich (10 kHz) zwar gute dielektrische Eigenschaften auf (z.B. εᵣ < 3 und tanδ = 40-8·10⁻³). Zudem konnte mit den genannten glasfaserverstärkten PTFE-Laminaten auch schon gezeigt werden, daß Dämpfungswerte tanδ < 3·10⁻³ im unteren Höchstfrequenzbereich bei ca. 10 GHz erreicht werden können. Die Klasse der UV-strukturierbaren Polyimide und der Benzocyclobutene zeigen zwar eine Stabilität bei höheren Temperaturen, sind allerdings nur für Dünnfilmanwendungen (prozessierbare Schichtdicke pro Lage ≤ 25 µm) ausgelegt und erfordern Aushärtebedingungen, die kritisch zu betrachten sind für sensitive Bauelemente. Ein weiterer Nachteil dieser Materialien besteht darin, daß die Haftfestigkeit sehr stark mit der Substratbeschaffenheit schwankt und sich diese Materialien teilweise nicht mittels konventioneller Lithographie strukturieren lassen. Die vom Dielektrikum erwartete hohe mechanische und thermische Stabilität ist beim Einsatz solcher Materialien nicht gewährleistet.

Auch anorganisch-organische Hybridpolymere mit O-Si-O-Gruppen sind für Anwendungen in der mikroelektronischen Industrie geeignet. Denn Harze und Lacke aus solchen Materialien können Eigenschaften besitzen, die ihre Anwendung als Dielektrika im niederen Hochfrequenzbereich ermöglicht. Man erzielt mit ihnen z.B. Dielektrizitätszahlen von bis zu εᵣ ≈ 3 und dielektrische Verlustfaktoren von bis zu tanδ ≈ 4·10⁻³ bei 10 KHz. Für Anwendungen im Hoch- und Höchstfrequenzbereich sind die bekannten Materialien jedoch nicht einsetzbar. So ergab sich, daß UV-strukturierte Harze der bereits erwähnten DE 199 32 629 A1, die man ja aufgrund ihrer hohen Transparenz und guten mechanischen Eigenschaften für die Anwendungszwecke der vorliegenden Erfindung als gut geeignet in Erwägung ziehen würde, im Höchstfrequenzbereich (im GHz-Bereich) deutlich schlechtere Werte besitzen: Beispielsweise zeigte ein Polymer aus Diphenylsilandiol und Methacryloxypropyltrimethosysilan in diesem Bereich einen Verlustfaktor tanδ von 0,03. So ist auch ein Einsatz solcher Materialien als Dielektrika für Höchstfrequenzanwendungen in der Kommunikationstechnik (RF-Sende und Empfangsmodule; multi-chip module,MCM) oder in der Automobilindustrie (Abstandsradar, als Dünn-/Dickschicht-MehrlagenSchaltungen, DSML) bisher nicht zufriedenstellend. Denn solche Anwendungen stellen außergewöhnliche Anforderungen an die Eigenschaften des Dielektrikums im Mikrowellenbereich, insbesondere für Frequenzen zwischen 10 und 100 GHz.

Aufgabe der vorliegenden Erfindung ist es, Materialien bereitzustellen, deren dielektrische Eigenschaften im Hoch- und Höchstfrequenzbereich (vor allem zwischen 10 und 100 GHz) bei εᵣ < 3 und tanδ < 5·10⁻³ liegen und die darüber hinaus zumindest teilweise thermische, mechanische und Haftungseigenschaften besitzen, die denen herkömmlicher für Höchstfrequenzanwendungen verwendeter, rein organischer Materialien überlegen sind.

Es wurde überraschend gefunden, daß Materialien, die unter Verwendung eines monomeren Silandiols und mindestens einer weiteren monomeren Silankomponente hergestellt sind und in denen die Silankomponente mindestens eine organisch vernetzbare Gruppe trägt, die über Kohlenstoff an das Siliciumatom gebunden ist, die gewünschten dielektrischen Eigenschaften aufweisen, wenn das verwendete Silandiol keine Arylgruppen trägt.

Bevorzugt handelt es sich bei dem eingesetzten Silandiol um ein aliphatisches Silandiol, dessen organische Reste besonders bevorzugt einen deutlichen Raumbedarf besitzen, z.B. Isobutyl, Isopropyl oder Cyclohexyl.

Bei der anderen monomeren Silankomponente handelt es sich um eine Verbindung mit zwei oder drei Gruppen, die in Gegenwart der Hydroxygruppen des Silandiols und ggf. eines Katalysators für die Kondensation als Abgangsgruppen fungieren (sie werden nachstehend der Einfachheit halber häufig nur als "Abgangsgruppen" bezeichnet), beispielsweise Halogen, jeweils ggf. substituiertes Alkoxy, Acyloxy, Alkoxycarbonyl oder NR³₂ mit R³ gleich Wasserstoff oder Niederalkyl. Alkoxygruppen mit insbesondere einem bis vier Kohlenstoffatomen und Niederalkylgruppen der gleichen Kettenlänge sind bevorzugt. Prinzipiell können die Abgangsgruppen auch OH-Gruppen sein. Dies ist jedoch weniger günstig, weil dann bei der anorganischen Kondensationsreaktion Wasser entsteht, das seinerseits eine Reversibilität der Reaktionen bewirken kann, so daß Nebenreaktionen nicht mehr auszuschließen sind (siehe auch unten). Außerdem trägt die genannte Silankomponente wie erwähnt eine oder zwei gegen Hydrolyse stabile, organisch vernetzbare Gruppen, die sich thermisch und/oder photochemisch, z.B. in Gegenwart von UV-Photoinitiatoren, polymerisieren lassen. Diese Gruppe(n) ist/sind über Kohlenstoff an das Siliciumatom gebunden.

Die genannten Hybridmaterialien können durch ein einstufiges Verfahren erzeugt werden, wobei die Reaktion vorzugsweise in Abwesenheit von Wasser abläuft. Dadurch wird eine eindeutige Reaktionsroute erzwungen; Nebenreaktionen werden unterdrückt. Durch die Auswahl geeigneter Kondensationskatalysatoren und definierter Temperaturbereiche und Reaktionszeiten erfolgt die Umsetzung bei Einsatz der Ausgangskomponenten in geeigneten Mengenverhältnissen in engen stöchiometrischen Grenzen. Überraschenderweise hat sich herausgestellt, daß die Auswahl des Kondensationskatalysators dabei in manchen Fällen kritisch sein kann. Insbesondere ist der in der DE 199 32 629 A1 vorgeschlagene Katalysator Bariumhydroxid in der Regel ungeeignet; dagegen lassen sich z.B. mit Ammoniumfluoriden, insbesondere mit Tetrabutylammoniumfluorid (in der Form des Trihydrats), gute Ergebnisse erhalten. Aufgrund der Abwesenheit von Wasser führt das Verfahren zuverlässig und reproduzierbar zu Produkten mit den gewünschten Materialeigenschaften wie Viskosität, Löslichkeit, Brechungsindex, Substrathaftung, Temperaturbeständigkeit und dielektrischen Eigenschaften. Insbesondere kann an den Materialien eine ausgezeichnete und unerwartete Temperaturbeständigkeit beobachtet werden. Die Reproduzierbarkeit der Verfahrensführung ist Voraussetzung für das Gelingen der Vielzahl von Prozeßschritten, die bei der photolithographischen Strukturerzeugung erforderlich sind (Auftragsverfahren, z.B. durch Aufschleudern ("spin-on"), Vorbehandlungen wie Vortrocknung oder Vorhärtung, Photopolymerisation, Zwischenbehandlung, z.B. "postexposure-bake", Entwicklung, Nachbehandlung, z.B. Nachhärten ("post-bake")), und damit für den Einsatz in der Mikrosystemtechnik und für die Zuverlässigkeit des letztendlich erzeugten Bauteils.

In Chemical Abstracts 1996, 127:293965 wurde die Kinetik der photochemischen Polymerisation des Umsetzungsprodukts von Methacrylsäure-(dihydroxy-methyl-silyl-)methylester mit Dimethylsilandiol untersucht. Dieses Umsetzungsprodukt und sein Polymerisat werden von der vorliegenden Erfindung nicht umfaßt.

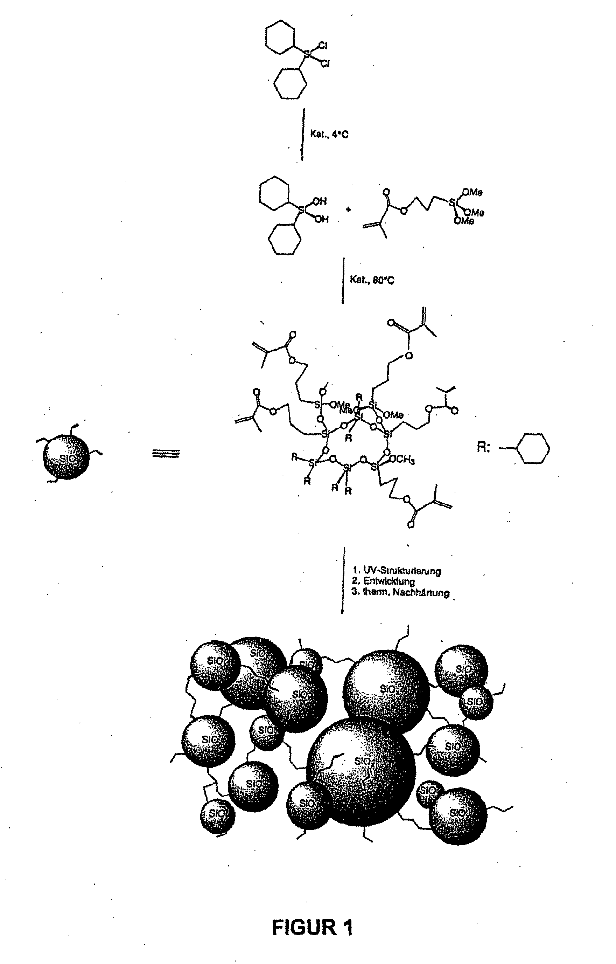

**Figur 1** zeigt schematisch die Herstellung eines erfindungsgemäßen Silanharzes unter Verwendung von aus Dicyclohexyldichlorsilan hergestelltem Dicyclohexylsilandiol und Methacryloxypropyltrimethoxysilan. Das Harz kann z.B. mit Hilfe von UV-Licht (nach Zusatz von UV-Photoinitiatoren) organisch polymerisiert und dabei ggf. strukturiert werden, wobei man ein anorganisch-organisches Hybridpolymer erhält.

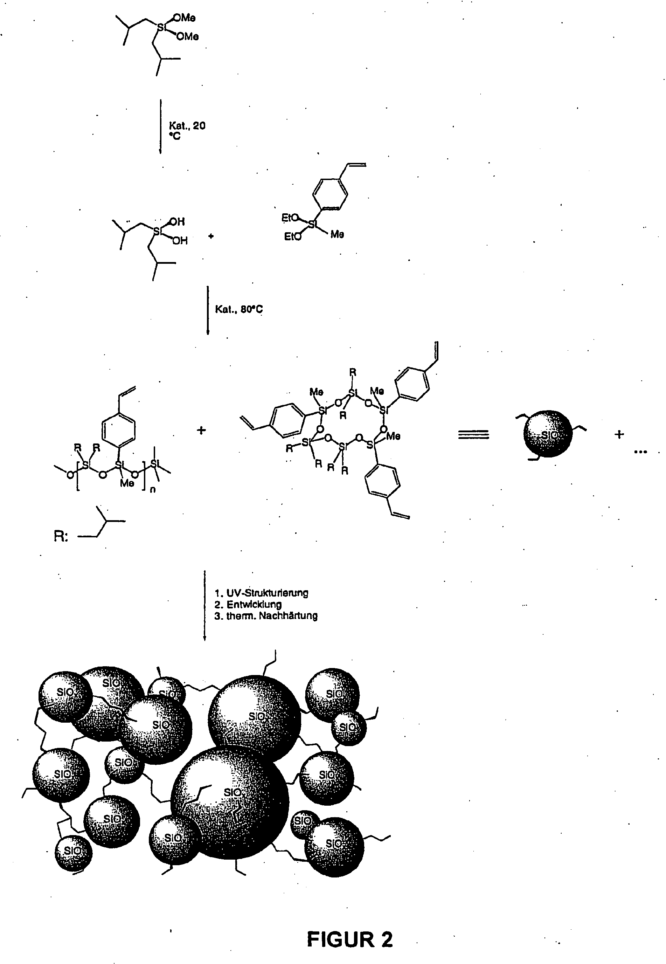

**Figur 2** zeigt, ebenfalls schematisch, die Herstellung eines erfindungsgemäßen Silanharzes aus Diisobutylsilandiol, gewonnen aus Düsobutyldimethoxysilan, und Styrylmethyldiethoxysilan sowie das daraus durch UV-Belichtung (nach Zusatz von UV-Photoinitiatoren) erhältliche anorganisch-organische Hybridpolymer.

Die erfindungsgemäßen Silanharze können mit Hilfe des bekannten, "modifizierten" Sol-Gel-Verfahrens hergestellt werden. Hierfür werden die Silankomponenten in einem geeigneten Solvens vorgelegt und gezielt einer Kondensation unterworfen, vorzugsweise in Gegenwart eines geeigneten Katalysators. Als kondensierbare Silankomponente eignen sich Silane der allgemeinen Formel (I)

RₐR²_{b}SiX_{4-a-b},

worin R eine radikalisch oder kationisch in Gegenwart von Licht, insbesondere von UV-Strahlung, bzw. thermisch organisch polymerisierbare Gruppe ist, R² eine geradkettige, verzweigte oder cyclische, gegebenenfalls substituierte C₁-C₁₂-Alkylgruppe ist, X gleich oder verschieden sein kann und in Gegenwart von OH-Gruppen und ggf. eines Kondensationskatalysators eine Abgangsgruppe ist, a 1 oder 2 bedeutet, b 0 oder 1 bedeutet und a+b nicht mehr als 2 ist. R ist vorzugsweise ausgewählt unter Gruppen mit einem deutlichen Raumbedarf, beispielsweise solchen aus oder mit Styryl, (Meth)Acryloxyalkyl oder Glycidoxyalkyl, z.B. Methacryloxypropyl oder Glycidoxypropyl. Stärker bevorzugt enthält oder ist R eine Styrylgruppe und/oder eine Methacrylsäuregruppe. Es ist besonders günstig, wenn a 1 und b 1 bedeuten, wobei R ganz besonders bevorzugt Styryl ist. In dieser Ausgestaltung stellt der Rest R² bevorzugt eine Alkylgruppe dar, am meisten bevorzugt ist in dieser Kombination R² Methyl. Aber auch die Gruppe R² kann voluminös sein und z.B. ggf. substituiertes i-Propyl, i-Butyl, t-Butyl oder Cyclohexyl bedeuten. X ist vorzugsweise ausgewählt unter C₁-C₆-Alkoxiden; Methoxy- oder Ethoxygruppen sind am meisten bevorzugt.

Als Silandiol eignen sich Silane der allgemeinen Formel (II)

R¹₂Si(OH)₂ (II)

worin R¹ gleich oder verschieden sein kann und eine geradkettige, verzweigte oder cyclische, gegebenenfalls substituierte C₁-C₁₂-Alkylgruppe bedeuten kann. R¹ kann statt dessen auch eine photochemisch oder thermisch über einen organischen Rest polymerisierbare, insbesondere eine kationisch oder radikalisch in Gegenwart von UV-Strahlung organisch polymerisierbare Gruppe sein, mit der Maßgabe, daß sie keinen Arylrest enthält. Die für R in Formel (I) als bevorzugt angegebenen Gruppen sind auch für die Gruppe R¹ bevorzugt, mit Ausnahme der Styrylgruppe. Es ist allerdings bevorzugt, daß das Silandiol keine organisch vernetzbare Gruppe trägt, daß R¹ also eine wie oben definierte Alkylgruppe ist, deren gegebenenfalls vorhandene Substituenten ausgewählt sind unter solchen, die keiner Polymerisation zugänglich sind, z.B. Halogen.

Es können je nach Bedarf eines oder auch mehrere Silane der Formeln (I) bzw. (II) eingesetzt werden. Das stöchiometrische Verhältnis zwischen den Silanen der Formel (I) und denen der Formel (II) ist vorzugsweise genau oder ungefähr 1:1. Bevorzugt erfolgt die Auswahl der beiden Komponenten so, daß das Gemisch eine möglichst große Anzahl von aliphatischen Gruppen enthält, d.h. beide Reste R¹ des Silandiols aliphatische Gruppen sind und die Indexsumme a+b in der Verbindung mit der Formel (I) 2 bedeutet, wobei die Gruppe R² dann vorzugsweise Methyl ist. Außerdem ist es wünschenswert, wenn die aliphatischen Gruppen im Silan der Formel (II) zumindest teilweise sterisch anspruchsvoll sind, wenn z.B. R¹ Isopropyl, Isobutyl oder Cyclohexyl bedeutet.

Außerdem können gegebenenfalls weitere Komponenten (z.B. zur Erhöhung der anorganischen Raumnetzdichte, der Härte und der Abrasionsfähigkeit des resultierenden Polykondensates) beigegeben werden, beispielsweise Alkoxide des Aluminiums, Bors und des Germaniums oder Übergangsmetallalkoxide in Mengen von vorzugsweise maximal 30 Gew.-%. Andere mögliche Zusätze sind übliche Lackadditive, Füllstoffe, Verlaufmittel und/oder Pigmente.

Die Silankomponenten werden vorzugsweise in einem geeigneten, möglichst wasserfreien Lösungsmittel vorgelegt. Als Lösungsmittel lassen sich vor allem ggf. alkoxylierte Niederalkansäureester einsetzen, z.B. Essigsäureester. Deren Estergruppen leiten sich vorzugsweise von geradkettigen oder verzweigten C₁-C₈-Alkylalkoholen ab, z.B. Isopropyl oder Isobutylalkohol. Die Mischung enthält in bevorzugter Weise einen geeigneten Kondensationskatalysator, z.B. Tetrabutylammoniumfluorid-Trihydrat. Dessen Menge wird so gering gehalten, daß das enthaltene H₂O keine nennenswerte Rolle als Edukt der Reaktion spielt.

Bei Bedarf wird die Mischung vorsichtig erwärmt oder erhitzt. Wiederholtes, längerdauerndes Erwärmen auf unter den Siedepunkt des Lösungsmittels, z.B. auf etwa 80°C und zwischenzeitliches Abkühlen auf Raumtemperatur ist günstig. Das vorgelegte Reaktionsmedium sowie die durch die Kondensation entstandenen leichtflüchtigen Komponenten wie Alkohole werden in der Regel zumindest teilweise, bei geeigneten Viskositätseigenschaften auch vollständig entfernt, z.B. durch Abdestillation am Rotationsverdampfer und/oder ggf. mit Mitteln, die geringere Drucke erlauben, um die Kondensation zu vervollständigen und das Verbleiben von SiOH-Gruppen im System weitgehend bzw. vollständig zu unterdrücken.

Die so erhaltenen Produkte sind in der Regel harzartig und besitzen Viskositäten, die es ermöglichen, daß sie als solche weiterverarbeitet werden können. Ggf. (z.B. wenn ihre Viskosität zu hoch für die vorgesehene Weiterverarbeitung ist) können sie mit einem geeigneten Lösemittel verdünnt werden, oder man kann einen geeigneten Teil des Lösemittels im Harz belassen.

In spezifischen Ausgestaltungen der Erfindung können die Silanharze erhalten werden, indem dem Reaktionsmedium vor und/oder während und/oder nach der Kondensation der wie oben beschriebenen Ausgangssubstanzen zusätzlich ein weiteres Kieselsäurepolykondensat, z.B. in Form eines flüssigen oder partikelförmigen Harzes, oder ggf. auch ein bereits organisch vernetztes anorganisch-organisches Hybridpolymer, z.B. in Form von festen Partikeln, zugesetzt wird, wobei diese Materialien ebenfalls gemäß der Erfindung erhalten bzw. ggf. bereits zusätzlich über die vorhandenen organischen Gruppen polymerisiert wurden. Bei diesen kann es sich jeweils um die gleichen Kondensate wie diejenigen handeln, in die sie eingearbeitet werden, bzw. um daraus erzeugte Hybridpolymere. Alternativ sind sie aus anderen Ausgangsmaterialien hergestellt. Insbesondere dann, wenn sich das weitere Polykondensat oder Hybridpolymer chemisch vom im übrigen verwendeten bzw. herzustellenden bzw. von dessen potentiellem organischem Polymerisationsprodukt unterscheidet, lassen sich durch das Vermischen oder Einbetten dieser zweiten Silanharz- bzw. Hybridpolymerkomponente verschiedene Eigenschaften verschiedener Harz- bzw. Harzpartikel-Systeme kombinieren. Die Eigenschaften der resultierenden Polykondensate, wie z.B. der Brechungsindex, der thermische Ausdehnungskoeffizient oder der Polymerisationsschrumpf, können auf diese Weise den Anforderungen des jeweiligen Anwendungsfalles angepaßt werden.

Die erfindungsgemäßen Harze können nach bekannten Verfahren thermisch oder photochemisch strukturiert werden, vorzugsweise im UV-Bereich. Als Photoiniatoren eignen sich hierfür beispielsweise die folgenden Substanzen von der Firma Ciba-Geigy: Irgacure 184, Irgacure 369, Irgacure 500 und andere Irgacure-Typen sowie die folgenden Substanzen von der Firma Merck: Darocure 1173, Darocure 1116, Darocure 1398, Darocure 1174 und Darocure 1020 und die Cyracure-Produkte der Firma Union-Carbide; des weiteren Benzophenon, 2-Chlorthioxanthon, 2-Methylthioxanthon, 2-lsopropylthioxanthon, Benzoin, oder 4.4'-Dimethoxybenzoin). Diese Substanzen werden üblicherweise in Mengen von 0.5 bis 5 Gew.-%, bezogen auf die Reaktionsmischung, eingesetzt. Erfolgt die Härtung mit sichtbaren Licht, so kann als Initiator z.B. Campherchinon eingesetzt werden. Als thermische Initiatoren kommen insbesondere organische Peroxide in Form von Diacylperoxiden, Peroxydicarbonaten, Alkylperestem, Perketalen, Ketonperoxiden und Alkylhydroperoxiden in Frage. Konkrete und bevorzugte Beispiele für thermische Initiatoren sind Dibenzoylperoxid, t-Butylperbenzoat und Azobisisobutyronitril.

Nach dem Entwickeln erhält man hierbei dreidimensional strukturierte Gegenstände, die sich z.B. für die Mikrosystemtechnik eignen. Die Produkte zeigen eine sehr gute Reproduzierbarkeit aller Materialeigenschaften, z.B. des Brechungsindexes, der Viskosität, der Temperaturbeständigkeit, der Verarbeitbarkeit in allen Prozeßschritten der UV-Strukturierung (Schichtdicken von 1-150 µm sind bevorzugt), sowie Dielektrizitätszahlen von unter 3, vorzugsweise unter 2,5. Der dielektrische Verlust tanδ im Höchstfrequenzbereich bei 24 bis 42 GHz, 77 GHz liegt unter 0,010, vorzugsweise unter 0,004. Die Temperaturbeständigkeit ist erstaunlich hoch; sie liegt, thermogravimetrisch gemäß Beispiel 5 gemessen, in der Regel oberhalb von 350°C, oft (und insbesondere unter Stickstoffatmosphäre) sogar über 400°C. Die Harze sind Si-OH-frei und zeigen eine sehr gute Haftung auf unterschiedlichsten Substraten, wie z.B. Silicium, Glas, Metallen, vorzugsweise Aluminium, und weiteren oxidischen Oberflächen.

Überraschenderweise wurde gefunden, daß sich die für die Herstellung der Silanharze eingesetzten Silandiole sehr schonend und in guter Ausbeute durch Hydrolyse entsprechender Dialkyldialkoxysilanverbindungen (Beispiel 1) bei definiertem, sehr genau einzuhaltendem pH (um Polymerisationsreaktionen zu verhindern und um die Hydrolyse zu katalysieren) und bei kontrollierten Temperaturen herstellen lassen, z.B. aus den Methoxy-, Ethoxy- oder sonstigen Niederalkoxyverbindungen. Für die Hydrolyse wird vorzugsweise Wasser in stöchiometrischen Mengen oder leicht überstöchiometrisch eingesetzt; als Lösungsmittel fungiert in vorteilhafter Weise ein Alkohol wie Ethanol oder Isopropylalkohol, ein Ether wie Diethylether, tert. Butylmethylether, ein Ester oder ein Keton wie Aceton. Die Reaktion wird katalytisch kontrolliert und gesteuert, vorzugsweise durch Zugabe einer Säure wie stark verdünnter HCI zur Einstellung eines leicht sauren pH-Wertes (insbesondere im Bereich von 3-4).

Überdies wurde gefunden, daß sich die für die Herstellung der Silanharze eingesetzten Silandiole aus den entsprechenden Dialkyldihalogensilanverbindungen (Beispiele 2 und 3) ebenfalls sehr schonend und in guter Ausbeute durch Hydrolyse und bei kontrollierten Temperaturen herstellen lassen, z.B. aus den Fluor-, Chlor- oder BromVerbindungen. Für die Hydrolyse wird vorzugsweise Wasser in stöchiometrischen Mengen oder leicht überstöchiometrisch eingesetzt; dabei ist der ebenfalls stöchiometrische bzw. leicht überstöchiometrische Zusatz von trialkylsubstituierten Aminen, vorzugsweise Triethylamin, zum Abpuffern der entstehenden Säure aus den oben beschriebenen Gründen (Polykondensationsgefahr) unerlässlich. Als Lösungsmittel fungiert hier wiederum in vorteilhafter Weise ein Alkohol wie Ethanol oder Isopropylalkohol, ein Ether wie Diethylether, tert. Butylmethylether, ein Ester oder ein Keton wie Aceton.

Nachstehend soll die Erfindung anhand von Beispielen näher erläutert werden.

### Beispiel 1:

### Diisobutylsilandiol

Reaktionsgleichung: (C₄H₉)₂Si(OCH₃)₂ + H₂O → (C₄H₉)₂Si(OH)₂ + 2HOCH₃
Ausgangskomponenten:

| | |
|---|---|
| (1) Diisobutyldimethoxysilan | 5.11 g (0.025mol) |
| (2) Wasser | 0.90 g (0.050 mol) |
| (3) Isopropanol | 0.60 g |

Die Komponenten (1)-(3) werden bei RT vorgelegt. Dann werden ungefähr 3.0 g einer 0,1n HCl-Lösung zugetropft bis der pH auf 4.5 fällt. Dabei ist eine sorgfältige pH-Kontrolle notwendig. Der pH steigt kontinuierlich an (5-6), weshalb noch ungefähr weitere 0.75 g einer 0.1 n HCl-Lösung zugegeben werden, bis der pH konstant bei 4 bleibt. Es wird 1 d bei RT weitergerührt, bis ein weißer Niederschlag ausfällt. Um den Niederschlag zu lösen, werden ca. 14 ml Diethylether zugegeben, dann noch ca. 15 ml Wasser und 5 ml NaOH (pH8). Die 2 Phasen werden im Scheidetrichter getrennt - die wäßrige Phase wird noch mit Diethylether (2x1 0 ml) extrahiert und die organischen Phasen daraufhin vereinigt und nochmals mit ca. 15 ml Wasser gewaschen - pH-Kontrolle der wäßrigen und organischen Phase ergibt 7. Die organische Phase wird daraufhin mit Natriumsulfat, wasserfrei, getrocknet. Die organische-Phase wird daraufhin abfiltriert und mit Diethylether nachgewaschen.

Die Etherphase wird dann am Rotationsverdampfer zuerst bei RT abdestilliert. Der Druck wird innerhalb von 30 min sukzessive erniedrigt: von 600 auf 14 mbar. Die Temperatur des Wasserbades wird von 20 auf 65 °C (bei konstanten 14 mbar) erhöht. Hier wird die Destillation abgebrochen, da in der Vorlage Kristallbildung beobachtet wird , die dann bei Abkühlen und Trocknen an der Luft vollständig durchkristallisieren. Die farblosen Kristalle werden in 50 ml Heptan gelöst- danach 4 d bei RT stehengelassen, wobei sich sehr feine farblose Kristallnadeln bilden. Schließlich werden die Kristalle abfiltriert und mit Heptan nachgewaschen.

Beim Trocknen bilden sich sehr feine, farblose Kristallnadeln, die sehr voluminös erscheinen ("Glaswolleartig"). Die Ausbeute an Diisobutylsilandiol wird zu ca. 3 g bestimmt was in etwa 70 % entspricht. Der Schmelzpunkt liegt zwischen 91-98 °C.

### Spektroskopische Charakterisierung:

IR (Poly-(chlortrifluorethylen)): ν̃ = 3265 (w), 2952 (s), 2866 (s), 1464 (s), 1364 (s), 1202 (s), 1125 (s), 1098 (s), 1042 (s), 969 (s), 900 (s), 851 (s), 768 (s), 601 (s) cm^{-1 1}H-NMR (400.1 MHz, CD₃COCD₃): δ 0.64 (m, 4H, -Si(CH₂CH)₂), 0.99 (m, 12H, -Si(CH₂CH(CH₃)₂)₂), 1.88 (m, 2H, -Si(CH₂CH)₂), 7.30 (s, 2H, -Si(OH)₂) ppm ¹³C-NMR (100.6 MHz, CD₃COCD₃): δ 24.4 (-CH), 26.2 (-CH₃), 26.5 (-CH₂) ppm ²⁹Si-NMR (79.5 MHz, CD₃COCD₃): δ ca. -8,5 ppm

### Beispiel 2:

### Dicyclohexylsilandiol

| | |
|---|---|
| (1) Dicyclohexyldichlorsilan | 50.7 g (0.19 mol) |
| (2) tert. Butylmethylether | 260 ml |
| (3) Triethylamin | 39.6 g(0.39 mol) |
| (4) Wasser | 7.60 g (0.42 mol) |
| (5) tert. Butylmethylether | 600 ml |
| (6) Aceton | 60 ml |
| (7) Triethylamin | 1.64 g (0.02 mol) |
| (8) Pentan | 560 ml |

Die Komponenten (3)-(6) werden vorgelegt und auf 4 °C vorgekühlt, dann die ebenfalls auf 4 °C vorgekühlte Mischung aus (1) und (2) innerhalb von 2.5 h langsam zugetropft. Es wird weitere 3 h bei 4 °C weitergerührt. Da der pH-Wert auf 5.5 fällt werden noch weiteres (7) zugefügt und über Nacht bei Raumtemperatur (RT) gerührt. Der Niederschlag wird abfiltriert und der Rückstand mit (2) gewaschen. Das Lösungsmittel im Filtrat wird größtenteils (~ 90 %) abdestilliert (bei 40 °C). Der Rückstand wird mit (8) versetzt, wobei sich ein Niederschlag bildet, der abfiltriert, mit (8) gewaschen und schließlich im Exikkator getrocknet wird. Die Ausbeuten des Reinprodukts lagen dabei zwischen 68, 87 und 93% (feiner weißer Niederschlag). Innerhalb dieser 3 Präparationen schwankte der Schmelzpunkt: 164.9-166.9, 164.7-168.4 und 165.5-168°C.

### Beispiel 3:

### Diisopropylsilandiol

Reaktionsgleichung: (C₃H₇)₂SiCl₂ + H₂O → (C₃H₇)₂Si(OH)₂ + 2 HCl
Ausgangskomponenten:

| | |
|---|---|
| (1) Diisopropyldichlorsilan | 4.26 g (0.02 mol) |
| (2) Diethylether | 70 ml |
| (3) Triethylamin | 4.76 g(0.05 mol) |
| (4) Wasser | 0.90 g (0.05 mol) |
| (5) Diethylether | 30 ml |
| (6) Aceton | 7 ml |

Ähnlich der Herstellung des bereits bekannten Diisobutylsilandiols werden die Komponenten (3)-(6) bei 4 °C vorgelegt, und eine ebenfalls auf 4 °C gekühlte Mischung von (1) in (2) wird vorsichtig innerhalb von 1.5h zugetropft und 1h bei 4 °C weitergerührt. Der weiße Niederschlag wird vollständig abfiltriert (mind. 2x). Im folgenden wird das Lösungsmittel vom Filtrat bei 40 °C (10 mbar) am Rotationsverdampfer (40 °C /10 mbar) abdestilliert, wobei sich ein sehr feiner weißer Niederschlag bildet, der dann in Heptan umkristallisiert wird, wobei sich "glaswollenartige" farblose Kristallnadeln bilden, die abfiltriert und getrocknet 2.08 g (70 %) Diisopropylsilandiol ergeben. Der Schmelzpunkt liegt zwischen 108.5-112.6 °C .

### Spektroskopische Charakterisierung:

IR (KBr): ν̃ = 3226 (w), 2945 (s), 2866 (s), 1464 (s), 1382 (s), 1247 (s), 1031 (s), 996 (s), 877 (s), 831 (s), 730 (s), 677 (s) cm⁻¹
¹H-NMR (400.1 MHz, CDCl₃): δ 0.85-1.15 (m, 14H, -Si(CH(CH₃)₂)₂), 2.20-2.70 (s, 2H, -Si(OH)₂) ppm
¹³C-NMR (100.6 MHz, CDCl₃): δ 12.7 (-CH), 17.0 (-CH₃) ppm
²⁹Si-NMR (79.5 MHz, CDCl₃): δ -3.75 ppm

### Beispiel 4:

### Herstellung eines erfindungsgemäßen Silanharzes

| | |
|---|---|
| (1) 3-Methacryloxypropyltrimethoxysilan (NT) | 1.88 g (0.008 mol) |
| (2) Dicyclohexylsilandiol | 1.72 g (0.008 mol) |
| (3) Tetrabutylammoniumfluorid-Trihydrat | 4.70 mg (15.0 µmol) |
| (4) Essigsäureisobutylester | 4.50 ml |

Die Komponenten (1)-(4) werden bei RT vorgelegt an 6 aufeinanderfolgenden Tagen jeweils für 8 h auf 80 °C erhitzt; dazwischen wird jeweils 16 h bei RT gerührt. Dann wird das Lösungsmittel abdestilliert und der Ansatz an 3 aufeinanderfolgenden Tagen jeweils für 8 h auf 80 °C erhitzt und dazwischen wieder jeweils 16 h bei RT gerührt. Danach werden 2 Tropfen HCl (2 M) zugegeben und wiederum 8 h bei 80 °C erhitzt, nachdem der Ansatz dann klar geworden ist wird das Lösungsmittel wiederum abdestilliert und es verbleiben 3.22 g (90 %) zähes Harz. Der Brechungsindex n₂₀ beträgt 1.4847.

Dielektrizitätszahl εᵣ: 2.81 und der dielektrische Verlust tanδ: 0.0045 (im Höchstfrequenzbereich bei 24 bis 42 GHz, 77 GHz)

### Spektroskopische Charakterisierung:

IR (NaCl): ν̃ =3500 (w), 2922 (s), 2848 (s), 1721 (s), 1638 (s), 1447 (s), 1322 (s), 1297 (s), 1194 (s), 1167 (s), 1105 (s), 1020 (s), 939 (s), 911 (s), 893 (s), 847 (s), 818 (s), 785 (s), 748 (s), 538 (s) cm⁻¹

### Vergleichsbeispiel zu Beispiel 4:

Beispiel 4 wurde wiederholt; jedoch wurde anstelle von Tetrabutylammoniumfluorid-Trihydrat Bariumhydroxid als Katalysator verwendet. Am Ende von drei Tagen konnte noch keine Umsetzung beobachtet werden.

### Beispiel 5:

### Herstellung eines erfindungsgemäßen Silanharzes

| | |
|---|---|
| p-Vinylphenylmethyldiethoxysilan | 2.57 g (10.9 mmol) |
| Diisobutylsilandiol | 2.00 g (11.4 mmol) |
| Essigsäureisobutylester | 5.14 g |
| Tetrabutylammoniumfluorid-Trihydrat | 5.90 mg (18.8 µmol) |

(1)-(4) werden vorgelegt und 51 h bei 80 °C gerührt (der Ansatz wird nach ca. 1 min klar). Danach wird das Lösungsmittel am Rotationsverdampfer abdestilliert (bei 40 °C wird der Druck auf 100 mbar innerhalb von 30 min erniedrigt). Der Rückstand wird noch weitere 19.5 h bei 80 °C weitergerührt und dann das restliche Lösungsmittel am Rotationsverdampfer abdestilliert (bei 40 °C wird der Druck auf 6 mbar innerhalb von 2h erniedrigt und noch 0.5 h bei 6 mbar abdestilliert). Die 3.40 g (74 %) klarer, ockerfarbener Rückstand sind dabei noch relativ flüssig.

Der Brechungsindex n₂₀ zweier getrennt nach diesem Beispiel hergestellter Proben betrug 1.5054 bzw. 1.5075. Für beide Proben lag die Dielektrizitätszahl εᵣ bei 2.47; der dielektrische Verlust tanδ wurde einmal mit 0.0038 und einmal mit 0,0035 (im Höchstfrequenzbereich bei 24 bis 42 GHz, 77 GHz) gemessen.

Das Material zeigt eine Temperaturbeständigkeit bis mindestens 415°C (thermogravimetrisch unter Stickstoff gemessen bei einer Heizrate von 5°C/min; Massenverlust <5%).

### Spektroskopische Charakterisierung:

IR (NaCl): ν̃ = 3065 (s), 2954 (s), 2897 (s), 2869 (s), 1746 (s), 1630 (s), 1600 (s), 1545 (s), 1465 (s), 1391 (s), 1365 (s), 1330 (s), 1260 (s), 1222 (s), 1124 (s), 1078 (s), 1017 (s), 989 (s), 953 (s), 908 (s), 832. (s), 810 (s), 770 (s) cm⁻¹

### Beispiel 6:

### Herstellung eines erfindungsgemäßen Silanharzes

| | |
|---|---|
| p-Vinylphenylmethyldiethoxysilan | 3.47 g (14.7 mmol) |
| Diisopropylsilandiol | 2.18 g (14.7mmol) |
| Essigsäureisobutylester | 6.83 g |
| Tetrabutylammoniumfluorid-Trihydrat | 7.70 mg (24.4 µmol) |

(1)-(4) werden vorgelegt und 13 d bei RT gerührt (der Ansatz wird nach 1 d klar). Danach wird das Lösungsmittel am Rotationsverdampfer abdestilliert (bei 40 °C wird der Druck auf 120 mbar innerhalb von 15 min erniedrigt und dann weitere 30 min dabei belassen). Der Rückstand wird noch weitere 28 h bei RT weitergerührt und dann das restliche Lösungsmittel am Rotationsverdampfer abdestilliert (bei 40 °C wird der Druck auf 10 mbar innerhalb von 1.25 h erniedrigt und noch 1 h bei 10 mbar belassen). Die 4.97 g (88 %) klarer, bernsteinfarbener Rückstand sind dabei noch sehr flüssig. Der Brechungsindex n₂₀ beträgt 1.5043.

Dielektrizitätszahl εᵣ: 2.59 und der dielektrische Verlust tanδ: 0.008 (im Höchstfrequenzbereich bei 24 bis 42 GHz, 77 GHz)

### Spektroskopische Charakterisierung:

IR (NaCl): ν̃ = 2945 (s), 2867 (s), 2869 (s), 1746 (s), 1630 (s), 1600 (s), 1464 (s), 1390 (s), 1260 (s), 1124 (s), 1090 (s), 1025 (s), 1010 (s), 909 (s), 885 (s), 832 (s), 809 (s), 759 (s), 693 (s) cm⁻¹

## Patentansprüche

1. Photochemisch und/oder thermisch strukturierbares Silanharz, erhalten durch zumindest teilweise Kondensation einer Mischung, enthaltend oder bestehend aus
(a) mindestens einer Silanverbindung mit der allgemeinen Formel (I)
RₐR²_{b}SiX_{4-a-b}, (I)
worin R eine photochemisch und/oder thermisch über einen organischen Rest radikalisch oder kationisch polymerisierbare Gruppe ist und R² eine geradkettige, verzweigte oder cyclische, gegebenenfalls substituierte C₁-C₁₂-Alkylgruppe ist, X gleich oder verschieden sein kann und eine Abgangsgruppe ist, a 1 oder 2 bedeutet, b 0 oder 1 bedeutet und a+b nicht mehr als 2 ist, und
(b) mindestens einem Silandiol der allgemeinen Formel (II)
R¹₂Si(OH)₂ (II)
worin R¹ gleich oder verschieden sein kann und eine geradkettige, verzweigte oder cyclische, gegebenenfalls substituierte C₁-C₁₂-Alkylgruppe oder eine photochemisch und/oder thermisch über einen organischen Rest radikalisch oder kationisch polymerisierbare Gruppe mit Ausnahme einer solchen ist, die einen Arylrest enthält,
**dadurch gekennzeichnet, dass** die Kondensation in einem wasserfreien Lösungs- oder Suspensionsmittel durchgeführt wurde und anschließend sowohl das Lösungs- oder Suspensionsmittel als auch bei der Kondensation entstandene leichtflüssige Komponenten entfernt wurden.

2. Photochemisch und/oder thermisch strukturierbares Silanharz nach Anspruch 1, ausgenommen ein Harz, das durch zumindest teilweise Kondensation einer Mischung aus Dimethylsilandiol und Methacrylsäure-(methyl-dihydroxysilyl-)methylester erhalten wurde.

3. Photochemisch und/oder thermisch strukturierbares Silanharz nach Anspruch 1, **dadurch gekennzeichnet, daß** die Silanverbindungen der Formel (I) und der Formel (II) im Verhältnis von genau oder ungefähr 1:1,bezogen auf die Monomere, eingesetzt werden.

4. Photochemisch und/oder thermisch strukturierbares Silanharz nach einem der Ansprüche 1 bis 3, **dadurch gekennzeichnet, daß** die Verbindung mit der Formel (I) eine Styrylgruppe oder eine Methacrylatgruppe enthält und daß der Rest X eine Alkoxygruppe, vorzugsweise Methoxy oder Ethoxy, ist, und/oder daß die Reste R¹ in der Verbindung mit der Formel (II) ausschließlich geradkettige, verzweigte oder cyclische, gegebenenfalls substituierte C₁-C₁₂-Alkylgruppen sind.

5. Photochemisch und/oder thermisch strukturierbares Silanharz nach Anspruch 4, **dadurch gekennzeichnet, daß** R in der Verbindung mit der Formel (I) Styryl und R² in dieser Verbindung Methyl bedeutet.

6. Photochemisch und/oder thermisch strukturierbares Silanharz nach einem der voranstehenden Ansprüche, **dadurch gekennzeichnet, daß** das Silandiol mit der Formel (II) sterisch anspruchsvolle aliphatische Gruppen enthält.

7. Photochemisch und/oder thermisch strukturierbares Silanharz nach Anspruch 6, **dadurch gekennzeichnet, daß** die sterisch anspruchsvollen Gruppen in Formel (II) ausgewählt sind unter Isopropyl, Isobutyl und Cyclohexyl.

8. Verfahren zum Herstellen eines photochemisch und/oder thermisch strukturierbaren Silanharzes nach einem der voranstehenden Ansprüche, **dadurch gekennzeichnet, daß** eine Mischung, enthaltend oder bestehend aus
(a) mindestens einer Silanverbindung mit der allgemeinen Formel (I)
RₐR²_{b}SiX_{4-a-b}, (I)
worin R eine photochemisch und/oder thermisch über einen organischen Rest radikalisch oder kationisch polymerisierbare Gruppe ist und R² eine geradkettige, verzweigte oder cyclische, gegebenenfalls substituierte C₁-C₁₂-Alkylgruppe ist, X gleich oder verschieden sein kann und eine Abgangsgruppe ist, a 1 oder 2 bedeutet, b 0 oder 1 bedeutet und a+b nicht mehr als 2 ist, und
(b) mindestens einem Silandiol der allgemeinen Formel (II)
R¹₂Si(OH)₂ (II)
worin R¹ gleich oder verschieden sein kann und eine geradkettige, verzweigte oder cyclische, gegebenenfalls substituierte C₁-C₁₂-Alkylgruppe oder eine photochemisch und/oder thermisch über einen organischen Rest radikalisch oder kationisch polymerisierbare Gruppe mit Ausnahme einer solchen ist, die einen Arylrest enthält,
in Gegenwart eines im wesentlichen wasserfreien Lösungs- oder Suspensionsmittels zumindest teilweise einer Kondensationsreaktion unterworfen und das Lösungs- oder Suspensionsmittel sowie bei der Reaktion entstandene leichtflüssige Komponenten entfernt werden.

9. Verfahren nach Anspruch 8, **dadurch gekennzeichnet, daß** als Kondensationskatalysator ein Ammoniumfluorid, vorzugsweise Tetrabutylammoniumfluorid-Trihydrat, eingesetzt wird.

10. Verwendung von photochemisch und/oder thermisch strukturierbaren Silanharzen nach einem der Ansprüche 1 bis 7 zur Herstellung von ggf. strukturierten, zumindest teilweise kondensierten und über organische Gruppen polymerisierten Hybridpolymeren.

11. Zumindest teilweise kondensiertes und über organische Gruppen polymerisiertes Hybridpolymer, erhalten aus oder unter Verwendung eines Silanharzes nach einem der Ansprüche 1 bis 7.

12. Verwendung gemäß Anspruch 10, wobei die Hybridpolymere für die Hoch- und Höchstfrequenztechnik, und zwar insbesondere als Dielektrika, in Mehrschichtsystemen in SBU-Technik und in Dünn-Dickschicht-Mehrlagenschaltungen (DSML), als Trägermaterialien für Dünnschichtschaltungen und insbesondere in der Kommunikationstechnik, vorzugsweise als RF-Sende- oder Empfangsmodule sowie als Multi-Chip-Module oder für die Automobilindustrie als Abstandsradar vorgesehen sind.

13. Verwendung eines Hybridpolymeren gemäß Anspruch 11 in der Hoch- und Höchstfrequenztechnik, und zwar insbesondere als Dielektrikum, in Mehrschichtsystemen in SBU-Technik und in Dünn Dickschicht-Mehrlagenschaltungen (DSML), als Trägermaterialien für Dünnschichtschaltungen und insbesondere in der Kommunikationstechnik, vorzugsweise als RF-Sende- oder Empfangsmodule sowie als Multi-Chip-Module (MCM) oder in der Automobilindustrie als Abstandsradar.

## Claims

1. Silane resin that can be structured photochemically and/or thermally, obtained by at least partial condensation of a mixture, containing or consisting of:
a) at least one silane compound of the general formula (I)
RₐR²_{b}SiX_{4-a-b} (I)
wherein R is a group that can be polymerized photochemically and/or thermally via an organic rest by radical polymerization or cationic polymerization; and R² is a straight-chain, branched, or cyclic, optionally substituted, C₁-C₁₂ alkyl group; X is identical or different and is a leaving group; a is 1 or 2; b is 0 or 1; and a+b are not more than 2;
b) at least one silanediol of the general formula (II)
R¹₂Si(OH)₂ (II)
wherein R¹ is identical or different and is a straight-chain, branched, or cyclic, optionally substituted, C₁-C₁₂ alkyl group or a group that can be polymerized photochemically and/or thermally via an organic rest by radical polymerization or cationic polymerization, with the proviso that the group does not contain an aryl rest,
**characterized in that** the condensation has been performed in an aqueous-free solvent or suspending agent and **in that** subsequently, the solvent or suspension agent as well as components formed during condensation have been removed.

2. Silane resin that can be structured photochemically and/or thermally according to claim 1, except a resin that is obtained by at least partial condensation of a mixture of dimethyl silanediol and methacrylic acid (methyl dihydroxy silyl) methylester.

3. Silane resin that can be structured photochemically and/or thermally according to claim 1, **characterized in that** the silane compounds of the formula (I) and of the formula (II) are reacted in a ratio of precisely or approximately 1:1, based on the monomers.

4. Silane resin that can be structured photochemically and/or thermally according to one of the claims 1 through 3, **characterized in that** the compound of the formula (I) contains a styryl group or a methacrylate group and the rest X is an alkoxy group, preferably methoxy or ethoxy, and/or the rests R¹ in the compound of the formula (II) are exclusively straight-chain, branched, or cyclic, optionally substituted, C₁-C₁₂ alkyl groups.

5. Silane resin that can be structured photochemically and/or thermally according to claim 4, **characterized in that** R in the compound of the formula (I) is styryl and R² in this compound is methyl.

6. Silane resin that can be structured photochemically and/or thermally according to one of the preceding claims, **characterized in that** the silanediol of the formula (II) contains sterically demanding aliphatic groups.

7. Silane resin that can be structured photochemically and/or thermally according to claim 6, **characterized in that** the sterically demanding aliphatic groups in the formula (II) are selected from isopropyl, isobutyl, and cyclohexyl.

8. Method for preparing a silane resin that can be structured photochemically and/or thermally according to one of the preceding claims, **characterized in that** a mixture, containing or consisting of:
a) at least one silane compound of the general formula (I)
RₐR²_{b}SiX_{4-a-b} (I)
wherein R is a group that can be polymerized photochemically and/or thermally via an organic rest by radical polymerization or cationic polymerization; and R² is a straight-chain, branched, or cyclic, optionally substituted, C₁-C₁₂ alkyl group; X is identical or different and is a leaving group; a is 1 or 2; b is 0 or 1; and a+b are not more than 2; and
b) at least one silanediol of the general formula (II)
R¹₂Si(OH)₂ (II)
wherein R¹ is identical or different and is a straight-chain, branched, or cyclic, optionally substituted, C₁-C₁₂ alkyl group or a group that can be polymerized photochemically and/or thermally via an organic rest by radical polymerization or cationic polymerization with the exception of one that contains an aryl rest;
is subjected at least partially to a condensation reaction in the presence of a substantially anhydrous solvent or suspension agent, and the solvent or suspension agent as well as components which have formed during the reaction are removed.

9. Method according to claim 8, **characterized in that** ammonium fluoride, preferably tetrabutyl ammonium fluoride trihydrate, is used as a condensation catalyst.

10. Use of silane resins that can be structured photochemically and/or thermally according to one of the claims 1 to 7 for preparing hybrid polymers that are at least partially condensed and polymerized via organic groups and are optionally structured.

11. Hybrid polymer that is at least partially condensed and polymerized via organic groups obtained from or by using a silane resin according to one of the claims 1 to 7.

12. Use according to claim 10, wherein the hybrid polymers are intended for high and extremely high frequency applications, and specifically as dielectrics, in multi-layer systems in SBU technology and in multi-layer thin-thick-film circuits (TFC or DSML), as carrier materials for thin-film circuits and especially in communications technology, preferably as RF sending or receiving modules or as multichip modules or for the automobile industry as distance radar.

13. Use of a hybrid polymer according to claim 11 in high frequency applications, and specifically as dielectrics, in multi-layer systems in SBU technology and in multi-layer thin-thick-film circuits (TFC or DSML), as carrier materials for thin-film circuits and especially in communications technology, preferably as RF sending or receiving modules or as multichip modules (MCM) or for the automobile industry as distance radar.

## Revendications

1. Résine de silane pouvant être structurée par voie photochimique et/ou thermique, obtenue par une condensation au moins partielle d'un mélange contenant ou constitué de :
(a) au moins un composé de silane de formule générale (I) :
**RₐR²_{b}SiX_{4-a-b},** **(I)**
dans laquelle R représente un groupement polymérisable, par le biais d'un radical organique, par voie radicalaire ou cationique sous activation photochimique et/ou thermique, et R² représente un groupement alkyle en C₁-C₁₂ à chaîne linéaire, ramifiée ou cyclique, éventuellement substitué, les substituants X peuvent être identiques ou différents et représentent un groupement de départ, a valant 1 ou 2, b valant 0 ou 1 et a + b n'étant pas supérieur à 2 et,
(b) au moins un silanediol de formule générale (II) :
**R¹₂Si(OH)₂** **(II)**
dans laquelle les radicaux R¹ peuvent être identiques ou différents et représentent un groupement alkyle en C₁-C₁₂ à chaîne linéaire, ramifiée ou cyclique, éventuellement substitué, ou un groupement polymérisable, par le biais d'un radical organique, par voie radicalaire ou cationique sous activation photochimique et/ou thermique, à l'exception d'un groupement du type contenant un radical aryle,
**caractérisée en ce que** l'on effectue la condensation dans un solvant ou dans un milieu de suspension exempt d'eau, puis **en ce que** l'on élimine tant le solvant, ou le milieu de suspension, que les composants se liquéfiant aisément, formés lors de la condensation.

2. Résine de silane pouvant être structurée par voie photochimique et/ou thermique selon la revendication 1, excepté une résine qui résulte d'au moins une condensation partielle d'un mélange de diméthylsilanediol et d'ester de méthyldihydroxy-(silyl)méthyle et d'acide méthacrylique.

3. Résine de silane pouvant être structurée par voie photochimique et/ou thermique selon la revendication 1, **caractérisée en ce que** les composés de silane de formule (I) et de formule (II) sont utilisés dans le rapport exact ou approximatif de 1:1 par rapport aux monomères.

4. Résine de silane pouvant être structurée par voie photochimique et/ou thermique selon l'une quelconque des revendications 1 à 3, **caractérisée en ce que** le composé de formule (I) contient un groupement styryle ou un groupement méthacrylate, et **en ce que** le radical X représente un groupement alcoxy, de préférence, un méthoxy ou un éthoxy et/ou **en ce que** les radicaux R¹ dans le composé de formule (II) représentent exclusivement des groupements alkyle en C₁-C₁₂ linéaires, ramifiés ou cycliques, éventuellement substitués.

5. Résine de silane pouvant être structurée par voie photochimique et/ou thermique selon la revendication 4, **caractérisée en ce que** le radical R dans le composé de formule (I) représente le styryle et **en ce que** le radical R² représente dans ce composé le méthyle.

6. Résine de silane pouvant être structurée par voie photochimique et/ou thermique selon l'une quelconque des revendications précédentes, **caractérisée en ce que** le silanediol de formule (II) contient des groupements aliphatiques exigeants au plan stérique.

7. Résine de silane pouvant être structurée par voie photochimique et/ou thermique selon la revendication 6, **caractérisée en ce que** les groupements exigeants au plan stérique dans la formule (II) sont choisis parmi l'isopropyle, l'isobutyle et le cyclohexyle.

8. Procédé de fabrication d'une résine de silane pouvant être structurée par voie photochimique et/ou thermique selon l'une quelconque des revendications précédentes, **caractérisé en ce que** l'on soumet un mélange contenant ou constitué de :
(a) au moins un composé de silane de formule générale (I) :
**Rₐ**R**²_{b}**SiX**_{4-a-b}**, **(I)**
dans laquelle R représente un groupement polymérisable, par le biais d'un radical organique, par voie radicalaire ou cationique sous activation photochimique et/ou thermique, et R² représente un groupement alkyle en C₁-C₁₂ à chaîne linéaire, ramifiée ou cyclique, éventuellement substitué, les substituants X peuvent être identiques ou différents et représentent un groupement de départ, a valant 1 ou 2, b valant 0 ou 1 et a + b n'étant pas supérieur à 2, et
(b) au moins un silanediol de formule générale (II) :
**R¹₂Si(OH)₂** **(II)**
dans laquelle les radicaux R¹ peuvent être identiques ou différents et représentent un groupement alkyle en C₁-C₁₂ à chaîne linéaire, ramifiée ou cyclique, éventuellement substitué, ou un groupement polymérisable, par le biais d'un radical organique, par voie radicalaire ou cationique sous activation photochimique et/ou thermique, à l'exception d'un groupement du type contenant un radical aryle,
en présence d'un solvant ou d'un milieu de suspension sensiblement exempt d'eau, au moins partiellement à une réaction de condensation, et **en ce que** l'on élimine le solvant ou le milieu de suspension, de même que les composants se liquéfiant aisément, formés lors de la réaction.

9. Procédé selon la revendication 8, **caractérisé en ce que** l'on utilise, comme catalyseur de condensation, un fluorure d'ammonium, de préférence, le fluorure de tétrabutylammonium trihydraté.

10. Utilisation de résines de silane pouvant être structurées par voie photochimique et/ou thermique selon l'une quelconque des revendications 1 à 7, pour la fabrication de polymères hybrides, éventuellement structurés, au moins partiellement condensés et polymérisés par le biais de groupements organiques.

11. Polymère hybride au moins partiellement condensé et polymérisé par le biais de groupements organiques, obtenu à partir d'une résine de silane selon l'une quelconque des revendications 1 à 7 ou en utilisant celle-ci.

12. Utilisation selon la revendication 10, dans laquelle les polymères hybrides sont prévus pour la technique des hautes fréquences et des très hautes fréquences et, en particulier, comme diélectriques dans des systèmes multicouches de la technique SBU et dans des circuits multicouches du type couche mince-couche épaisse (DSML), comme matériaux de support pour les circuits à couches minces et, en particulier, dans la technique des communications, de préférence, comme modules émetteurs ou récepteurs de RF, ainsi que comme modules à puces multiples, ou pour l'industrie automobile, comme radar détecteur de distance.

13. Utilisation d'un polymère hybride selon la revendication 11, dans la technique des hautes fréquences et des très hautes fréquences et, en particulier, comme diélectrique dans les systèmes multicouches de la technique SBU et dans les circuits multicouches du type couche mince-couche épaisse (DSML), comme matériaux de support pour les circuits à couches minces et, en particulier, dans la technique des communications, de préférence, comme modules émetteurs ou récepteurs de RF, ainsi que comme modules à puces multiples, ou pour l'industrie automobile comme radar détecteur de distance.
